(19) Europäisches Patentamt
European Patent Office
Office européen des brevets

(11) EP 2 410 006 A1

(12) EUROPEAN PATENT APPLICATION
published in accordance with Art. 153(4) EPC

(43) Date of publication:
25.01.2012 Bulletin 2012/04

(21) Application number: 10753515.5

(22) Date of filing: 16.03.2010

(51) Int Cl.:
*C08J 9/00* (2006.01) *B29C 55/02* (2006.01)
*H01M 2/16* (2006.01)

(86) International application number:
PCT/JP2010/054425

(87) International publication number:
WO 2010/107023 (23.09.2010 Gazette 2010/38)

(84) Designated Contracting States:
AT BE BG CH CY CZ DE DK EE ES FI FR GB GR HR HU IE IS IT LI LT LU LV MC MK MT NL NO PL PT RO SE SI SK SM TR

(30) Priority: 17.03.2009 JP 2009063955

(71) Applicant: Toray Industries, Inc.
Tokyo 103-8666 (JP)

(72) Inventors:
- KUMA, Takuya
Otsu-shi
Shiga 520-8558 (JP)
- IKOMA, Kei
Otsu-shi
Shiga 520-8558 (JP)
- OHKURA, Masatoshi
Otsu-shi
Shiga 520-8558 (JP)

(74) Representative: Hager, Thomas Johannes
Hoefer & Partner
Patentanwälte
Pilgersheimer Strasse 20
81543 München (DE)

# (54) POROUS POLYPROPYLENE FILM AND PRODUCTION METHOD THEREFOR

(57) This invention is a porous polypropylene film, in which the number of such portions where the quantity of light transmitted through each portion is not smaller than 5 times the average quantity of light transmitted through the film is 0.5 portion or less per 1 $m^2$.

The porous polypropylene film has a high porosity and excellent production characteristics, and when used as a separator in an electrical storage device, has excellent quality and few defects that could negatively impact battery performance. Using the porous polypropylene film, an electrical storage device can be produced having a suppressed occurrence of self-discharge and heating due to shorts.

EP 2 410 006 A1

## Description

### TECHNICAL FIELD

The present invention relates to a porous polypropylene film excellent in quality and productivity and capable of showing excellent battery characteristics when used as a separator of an electric storage device, and also to a production method therefor.

### BACKGROUND ART

Polypropylene films are used for diverse applications as industrial materials, packaging materials, optical materials and electric appliance materials owing to their excellent mechanical properties, thermal properties, electric properties and optical properties. Porous polypropylene films obtained by forming pores in the polypropylene films also have such excellent properties as permeability and low specific gravity in addition to the abovementioned properties of polypropylene films. Accordingly, studies are under way to use the porous polypropylene films for diverse applications as separators of batteries and electrolytic capacitors, various separation membranes, moisture-permeable water-proof films for clothing and medical applications, reflection sheets of flat panel displays, heat-sensitive transfer recording sheets, etc. Especially in the case where porous films are used as separators, it is of course required to lower the cost by enhancing productivity. In addition, because of the firing accidents of lithium ion batteries occurring in recent years, batteries are required to be safer and separators are also required to have fewer defects and foreign matters for assuring higher quality and reliability.

Various methods are proposed to make a polypropylene film porous. Pore-forming methods can be classified into wet methods and dry methods. In the wet methods, a sheet is formed with polypropylene as the matrix resin, and an additive to be extracted afterward from formed sheet is added to and mixed. Then, the additive only is extracted using a good solvent of the additive, to form voids in the matrix resin. Various wet methods are proposed (see Patent Document 1). In the wet methods, since the viscosity of the resin composition can be lowered, high-precision filtration can be performed, and further since casting can be performed at a low temperature, the deterioration of the resin composition can be decreased to assure excellent quality. However, cost reduction is difficult for such reasons that the extraction step is complicated and that a solvent treatment step is necessary.

On the other hand, with regard to dry methods, for example, in one proposed method, the lamellar structure in the film formed as a sheet and not yet stretched is controlled by employing low-temperature extrusion and high draft ratio at the time of melt extrusion, and the film is subsequently monoaxially oriented to cause cleavage at the lamellar interface, for forming voids (the so-called lamellar stretching method) (see Patent Document 2). If this method is used, since it is monoaxial stretching and the stretching ratio is low, the defects of the non-stretched film are unlikely to be enlarged in the stretching step to assure excellent quality as a separator. However, it is difficult to enhance productivity for such reasons that the area ratio is low and that the stretching speed is low, and further it is difficult to obtain a high porosity. Consequently in the case where the porous polypropylene film is used in an electric storage device, particularly as a separator for a lithium ion secondary battery, the battery performance could decline as the case might be.

In a proposed dry method capable of assuring a high productivity and achieving a further higher porosity, a large amount of inorganic particles or particles of a resin incompatible with, for example, polypropylene used as the matrix resin are added, and the mixture is formed into a sheet that is then stretched to cause cleavage at the interface between the particles and the polypropylene resin, for forming voids (see Patent Document 3). Further, proposed are many methods called β-crystal method in which the crystal density difference and crystal transformation between α-form crystals (α-crystals) and β-form crystals (β-crystals) as crystal polymorphic forms of polypropylene are used to form voids in a film (see Patent Documents 4 to 6).

In the case where the porous polypropylene films produced by the abovementioned various methods are used in electric storage devices, especially as separators in lithium ion secondary batteries, especially the β-crystal method can achieve a high porosity compared with the other methods, since voids can be ordinary formed by biaxial stretching. For this reason, the internal resistance of the battery can be kept low, and therefore the β-crystal method is said to be suitable for the separator in an electric storage device for a high output requiring a large current (see Patent Document 7).

### PRIOR ART DOCUMENTS

### PATENT DOCUMENTS

Patent Document 1: JP 55-131028 A

Patent Document 2: JP 55-32531 B
Patent Document 3: JP 57-203520 A
Patent Document 4: JP 63-199742 A
Patent Document 5: JP 6-100720 A
Patent Document 6: JP 9-255804 A
Patent Document 7: WO 05/103127

SUMMARY OF THE INVENTION

PROBLEMS TO BE SOLVED BY THE INVENTION

However, in the β-crystal method, defects caused by the particles, additive, etc. added to the resin can occur as the case may be. Further, since the stretching ratio is high, the defects are likely to be enlarged in the stretching step as the case may be. Accordingly if the β-crystal method is used for the separator of a secondary battery, the heat generation by a short-circuit and the likelihood of self discharge may occur as problems of the method.
This invention has been achieved as a result of a study made to solve the abovementioned problems of the prior art. The object of this invention is to provide a porous polypropylene film excellent in quality and productivity and capable of showing excellent battery characteristics when used as a separator of an electric storage device, and also to provide a production method therefor.

MEANS FOR SOLVING THE PROBLEMS

To achieve the abovementioned object, the polypropylene film of this invention is such that the number of such portions where the quantity of light transmitted through each portion is not smaller than 5 times the average quantity of light transmitted through the film is 0.5 portion or less per 1 $m^2$.

EFFECTS OF THE INVENTION

The porous polypropylene film of this invention has excellent quality and productivity and a high porosity, and therefore can be suitably used as a separator of an electric storage device.

MODES FOR CARRYING OUT THE INVENTION

The porous polypropylene film of this invention is a biaxially oriented polypropylene film and has through holes. It is preferred that the biaxially oriented polypropylene film is produced by a dry method. In this description, a through hole means a hole passing through both the surfaces of the film and having air permeability. A particular method for forming the through holes is, for example, a β-crystal method. The method can achieve uniform physical properties and film thinning.
In order to form through holes in a film using a β-crystal method, it is preferred that the β-crystal formability of the polypropylene resin is 40 to 90%. In the case where the β-crystal formability is less than 40%, since the β-crystal amount is small when the film is produced, the number of voids formed in the film by using the transformation into α-crystals is small. As a result, only a film with low air permeability can be obtained as the case may be. On the other hand, in the case where the β-crystal formability is more than 90%, it is necessary to add a large amount of the β-crystal nucleating agent described later and/or to use a polypropylene resin with very high stereoregularity, inevitably lowering the industrial practical value such as lowering the stability of film formation. It is industrially preferred that the β-crystal formability is 60 to 85%, and an especially preferred range is 65 to 80%.
In order to control the β-crystal formability in a range from 40 to 90%, it is preferred to use a polypropylene resin with a high isotactic index or to use, as an additive, a crystallization nucleating agent called a β-crystal nucleating agent capable of selectively forming β-crystal when added to the polypropylene resin. Examples of the β-crystal nucleating agent include various pigment-based compounds, amide-based compounds, etc.; more particularly, amide compounds; tetraoxaspiro compounds; quinacridones; iron oxide with a size of nanoscale; alkali metal salts and alkaline earth metal salts of carboxylates typified by potassium 1,2-hydroxystearate, magnesium benzoate, magnesium succinate, magnesium phthalate; aromatic sulfonic acid compounds typified by sodium benzenesulfonate and sodium naphthalenesulfonate; diesters and trimesters of dibasic and tribasic carboxylic acids; phthalocyanine-based pigments typified by phthalocyanine blue; two-component-based compounds consisting of an organic dibasic acid and the oxide, hydroxide or salt of a group IIA metal of the periodic table; compositions consisting of a cyclic phosphorus compound and a magnesium compound. Among them, especially amide-based compounds disclosed in JP 5-310665 A can be preferably used. Particularly, the amide-based compounds represented by the following general formula (1) can be used.

$R^1$-NHCO-X-CONH-$R^2$ (1)

wherein X denotes the following (2) or (3); and $R^1$ and $R^2$ denote, respectively independently, a cycloalkyl group with 5 to 12 carbon atoms.

[Chemical formulae 1]

(2)

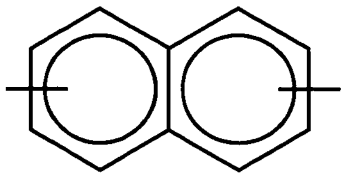

(3)

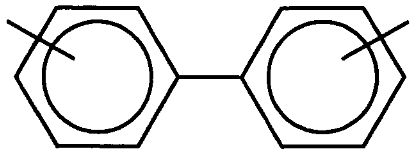

In order to control the β-crystal formability in a range from 40 to 90%, it is preferred that the polypropylene resin contains the β-crystal nucleating agent by 0.05 to 0.5 mass% based on the amount of the entire polypropylene resin. A more preferred range is 0.1 to 0.3 mass%.

It is preferred that the melt flow rate (hereinafter referred to as "MFR"; measuring condition ... 230°C, 2.16 kg) of the polypropylene resin constituting the porous polypropylene film of this invention is in a range from 2 to 30 g/10 min. Isotactic polypropylene resin is more preferred. If MFR is less than 2 g/10 min, the melt viscosity of the resin becomes high, making high-precision filtration difficult, and the quality of the film may decline as the case may be. If MFR is more than 30 g/10 min, the molecular weight is too low, and the film is likely to be broken when stretched, to lower the productivity as the case may be. A more preferred MFR range is 3 to 20 g/10 min.

In the case where isotactic polypropylene resin is used, it is preferred that the isotactic index is 90 to 99.9%. If the isotactic index is less than 90%, the crystallinity of the resin is low, and it may be difficult to achieve a high air permeability as the case may be.

As the polypropylene resin used in this invention, propylene homopolymer resin can of course be used, and in view of the stability and film formability in the film formation process and the uniformity of physical properties, a resin obtained by copolymerizing polypropylene with 5 mass% or less of ethylene or an α-olefin such as butene, hexane or octene can also be used. Meanwhile, the comonomer can be introduced into polypropylene by random copolymerization or block copolymerization.

Further, in view of higher film formability, it is preferred that the abovementioned polypropylene resin contains 0.5 to 5 mass% of a polypropylene with a high melt tension. A polypropylene with a high melt tension refers to a polypropylene resin, the tension of which in a molten state is enhanced by mixing a component having a high molecular weight or a component having a branched structure, with the polypropylene resin or copolymerizing a long-chain branched component with the polypropylene. Above all, it is preferred to use a polypropylene resin obtained by copolymerizing a long-chain branched component. The polypropylene with a high melt tension is commercially available, and, for example, polypropylene resins PF814, PF633 and PF611 produced by Basell, polypropylene resin WB130HMS produced by Borealis, and polypropylene resins D114 and D206 produced by Dow can be used.

As the polypropylene resin used in this invention, in view of the higher void forming efficiency at the time of biaxial stretching and the higher air permeability achieved by a larger pore size, a mixture consisting of 80 to 99 parts by mass of polypropylene and 20 to 1 part by mass of an ethylene·α-olefin copolymer is preferred. In this case, as the ethylene·α-olefin copolymer, straight-chain low-density polyethylene or ultra-low-density polyethylene can be used. Above all, an ethylene copolymer resin (PE copolymer resin) copolymerized with octene-1 and having a melting point of 60 to 90°C can be preferably used. As the ethylene copolymer, commercially available resins such as "Engage (registered trademark)" (types: 8411, 8452, 8100, etc.) produced by Dow Chemical can be used.

When the amount of the entire polypropylene resin constituting the film of this invention is 100 mass%, it is preferred that the content of the abovementioned ethylene copolymer resin is 1 to 10 mass%, since it is easy to control the porosity and the average through hole diameter described later in the respectively preferred ranges. In view of the mechanical properties of the film, it is more preferred that the content is 1 to 7 mass%.

The porous polypropylene film of this invention is such that the number of such portions where the quantity of light transmitted through each portion is not smaller than 5 times the average quantity of light transmitted through the film is 0.5 portion or less per 1 $m^2$. A portion where the quantity of light transmitted through each portion is not smaller than 5 times the average quantity of light transmitted through the film is likely to cause a short-circuit when the film is used as the separator. If the number of such portions where the quantity of light transmitted through each portion is not smaller than 5 times the average quantity of light transmitted through the film is larger than 0.5 portion per 1 $m^2$, the yield declines and the productivity declines. It is more preferred that the number of such portions where the quantity of light transmitted through each portion is not smaller than 5 times the average quantity of light transmitted through the film is 0.3 portion or less per 1 $m^2$.

Further, in the porous polypropylene film of this invention, it is preferred that the number of such portions where the quantity of light transmitted through each portion is 3 times to smaller than 5 times the average quantity of light transmitted through the film is 1 portion or less per 1 $m^2$. A portion where the quantity of light transmitted through each portion is 3 times to smaller than 5 times the average quantity of light transmitted through the film does not pose any problem in the case where a shutdown layer is additionally provided in view of safety or in the case where the separator is used in a low output battery. However, in the case where a high output is requested like a car-mounted battery, a slight short-circuit may occur to shorten the life of the battery as the case may be. If the number of such portions where the quantity of light transmitted through each portion is 3 times to smaller than 5 times the average quantity of light transmitted through the film is more than 1 portion per 1 $m^2$, the yield may decline and the productivity may decline as the case may be. It is more preferred that the number of such portions where the quantity of light transmitted through each portion is 3 times to smaller than 5 times the average quantity of light transmitted through the film is 0.5 portion or less per 1 $m^2$.

In order to obtain a porous polypropylene film with excellent quality expressed by such a number of portions, at first, it is preferred to perform high-precision filtration in the film formation process or in the raw material preparation process for removing the foreign matters in the raw materials. It is preferred that the filtration precision is 50 $\mu$m, i.e., that the foreign matters of 50 $\mu$m or more can be removed. More preferred filtration precision is 20 $\mu$m, and the most preferred is 10 $\mu$m. If the filtration precision is more than 50 $\mu$m, the foreign matters passing through the filter medium may trigger the formation of coarse voids or pinholes as the case may be. In general, since a molten polypropylene resin has a high viscosity, it is preferred to use a leaf-disc type filter with a wide filtration area for high-precision filtration. However, a leaf-disc type filter is complicated in passage, and the resin is retained in any portion. If the resin is retained in any portion on the downstream side of the filter, the particles and/or additives added to the polypropylene resin are aggregated or thermally deteriorated in the portion, to trigger the formation of coarse voids and pinholes as the case may be.

Especially in the case where an amide-based compound represented by the abovementioned general formula (1) is contained, the β-crystal formability of polypropylene triggering the formation of pores can be enhanced, but on the other hand, the contained amide-based compound grows as crystals in the retained molten polypropylene resin and flows into the film as film defects. Thus, the amide-based compound could lower the productivity as the case might be.

Even if such defects may not occur immediately after film formation, the frequency of the defects may increase with the progression of continuous film formation as the case may be, to lower the productivity. In order to avoid the defects, it is preferred to install one or more flat sheet type filters (for example, screen filters, etc.) on the downstream side of the high-precision filter. In the case where multi-stage filtration is performed, the filtration precision is made finer with the progression toward the downstream side in order to achieve a longer filtration life. However, in this invention, it is preferred that the filtration precision of the flat sheet type filter is coarser than the aforementioned precision of the high-precision filter. Specifically the coarseness of the flat sheet type filter is 1.8 to 3 times that of the high-precision filter. In the case where the coarseness is less than 1.8 times, since a flat sheet type filter cannot be enlarged in filtration area, the filtration pressure rises to break the filter, and if the discharge quantity is kept low for preventing the rise of filtration pressure, the retention time increases, to increase defects as the case may be. If the coarseness is more than 3 times, the aggregate of particles and additives passing through the filter medium may trigger the formation of coarse voids and pinholes as the case may be. It is preferred that the filtration precision of the flat sheet type filter is 100 $\mu$m, i.e., that the foreign matters of 100 $\mu$m or more can be removed. More preferred filtration precision is 50 $\mu$m, and the most preferred is 20 $\mu$m. If the filtration precision is more than 100 $\mu$m, the aggregate such as particles and adhesives passing through the filter medium may trigger the formation of coarse voids and pinholes as the case may be. Since a flat sheet type filter cannot have a large filtration area, the lower limit of the filtration precision is often approx. 20 $\mu$m.

Further, it is preferred that a flat sheet type filter is installed at a position as downstream as possible, for example, immediately before the die or immediately before a feed block in the case where the feed block is used for lamination.

Meanwhile, the portions where the aggregate such as particles and additives triggers the formation of coarse voids and pinholes are portions where the quantity of light transmitted through each portion is large, and such portions may deteriorate battery characteristics as the case may be, if the film is used as the separator.

The filter media used in the high-precision filter and the flat-plate filer can be respectively a sintered metal,

porous ceramic, sand or wire fabric, etc. Especially in the case where the amide-based compound represented by the abovementioned general formula (1) is contained as a β-crystal nucleating agent, it is preferred to use a sintered filter containing a sintered metal or porous ceramic rather than using a screen filter such as a wire fabric, for such reasons that the β-crystal nucleating agent grows like needles and that the frequency of defects can be effectively lowered.

Further, if a static mixer is installed on the downstream side of the high-precision filter or on the downstream side of the flat sheet type filter installed on the downstream side of the high-precision filter, coarse voids and pinholes can be effectively decreased. The reason is considered to be that the particles and additives aggregated in any abnormally retained portion after the high-precision filter or after the flat sheet type filter are re-dispersed in the highly viscous polypropylene resin due to the passage suddenly bent by the static mixer, etc., to decrease the coarse voids and pinholes.

It is preferred that the temperature of the melt extrusion is 190°C to 240°C. A more preferred range is 200°C to 230°C, and a further more preferred range is 200°C to 220°C. If the temperature is higher than 240°C, the particles and additives added to the polypropylene resin are aggregated to trigger the formation of coarse voids and pinholes as the case may be. If the temperature is lower than 190°C, the resin becomes low in flowability, and high-precision filtration may become difficult as the case may be. Further, in order to inhibit the aggregation of particles and additives, the raw material hoppers may be purged with nitrogen or an antioxidant may also be added to the raw materials.

In view of the ion conductivity in the case where the porous polypropylene film of this invention is used as the separator, it is preferred that the porosity is 60 to 85%. If the porosity is less than 60%, the electric resistance of the film used as the separator becomes large, and heat may be generated in use for a high output application, to lose the energy as the case may be. On the other hand, if the porosity is more than 85%, the strength of the film becomes too low, and, for example, when the film is wound together with electrodes, to be accommodated in a battery, it may be broken as the case may be disadvantageously in view of handling properties. In view of both excellent battery characteristics and strength, it is more preferred that the porosity is 65 to 80%, and an especially preferred range is 65 to 75%.

As the method for controlling the porosity of the porous polypropylene film in the preferred range, if a resin obtained by mixing a polypropylene resin and an ethylene copolymer resin at a specific ratio is used as described above when pores are formed in the polypropylene film by the β-crystal method, the intended porosity is likely to be achieved. Further, if the specific biaxial stretching conditions described later are employed, the intended porosity can be effectively achieved. It is difficult to obtain a porous film with a high porosity and a practical strength at low cost if a wet method or a monoaxially oriented film is used.

In order that the porous polypropylene film of this invention may be suitably used as the separator of an electric storage device, it is preferred that the air resistance is 10 to 500 sec/100 ml. In this description, the air resistance refers to the air resistance (Gurley) specified in JIS P 8117 (1998), and in this invention, the value is evaluated using a type B testing machine of JIS P 8117. If the air resistance is less than 10 sec/100 ml, the film strength is low, and when the film is used as the separator, pinholes are easily formed to cause a short-circuit as the case may be. Further, for example, when the film is wound to be accommodated in a battery, it may be broken as the case may be disadvantageously in view of handling properties. If the air resistance is more than 500 sec/100 ml, the ion conductivity is poor. In view of exhibiting an excellent ion conductivity as the separator, it is more preferred that the air resistance is 30 to 300 sec/100 ml. An especially preferred range is 50 to 200 sec/100 ml.

As the method for controlling the air resistance in the preferred range, as described for the abovementioned porosity, if a resin obtained by mixing a polypropylene resin and an ethylene copolymer resin at a specific ratio is used, the preferred air resistance is likely to be achieved. Further, if the specific biaxial stretching conditions described later are employed, the preferred air resistance can be effectively achieved.

It is preferred that the overall thickness of the porous polypropylene film of this invention is 10 to 50 μm. If the overall thickness is less than 10 μm, the film may be broken during use as the case may be. If it is more than 50 μm, the rate of the volume of the porous film occupying in the electric storage device is too high, and a high energy density may not be able to be obtained as the case may be. It is more preferred that the overall thickness of the film is 12 to 30 μm, and a further more preferred range is 14 to 25 μm.

It is preferred that the breaking strength in the machine direction $E_M$ of the porous polypropylene film of this invention is 65 MPa or more. In the case where the breaking strength is less than 65 MPa, when the film is assembled as a separator to produce an electric storage device, the film may be elongated, wrinkled or broken to lower the productivity as the case may be. In view of the windability in the battery, more preferred is 70 MPa or more. The upper limit of the breaking strength in the machine direction is not especially limited, but realistically the upper limit is approx. 150 MPa or less.

Further, the breaking strength in the transverse direction $E_T$ of the porous polypropylene film of this invention is 45 MPa or more. If the breaking strength is less than 45 MPa, the difference from the breaking strength in the machine direction is large, and the porous polypropylene film is likely to be torn in the machine direction as the case may be. The upper limit of the breaking strength in the transverse direction is not especially limited, but realistically the upper limit is approx. 150 MPa or less.

The breaking strength can be controlled by adjusting the crystallinity of the polypropylene, the porosity of the

obtained porous film, the orientation state (the in-plane orientation state) of the film, etc. If the porosity is decreased within a range from 60 to 85%, the strength becomes higher, and if it is increased, the strength becomes lower. In this case, if the film is more highly plane oriented, the strength can be made higher even though the porosity remains the same. Therefore, the control of the orientation state is important. The plane orientation of a porous film can be made higher if the ratio is higher and/or the temperature is lower in the stretching conditions, for example, in the case where the film is stretched at least in one direction in the film formation process. Especially in order to enhance the breaking strength in the machine direction and the breaking strength in the transverse direction in good balance, it is effective to use a longitudinal-lateral sequential biaxial stretching method at ratios of 3 to 10 times respectively in the machine direction and in the transverse direction.

The porous polypropylene film of this invention can contain various additives such as an antioxidant, thermal stabilizer, antistatic agent, inorganic or organic particles as a lubricant, blocking preventive agent and incompatible polymer to such an extent that the effects of this invention are not impaired. Especially for the purpose of preventing the oxidative deterioration caused by the heat history of the polypropylene resin, it is preferred to add 0.01 to 0.5 part by mass of an antioxidant per 100 parts by mass of the polypropylene resin.

The method for producing the porous polypropylene film of this invention is specifically described below. Meanwhile, the method for producing the porous film of this invention is not limited to the method described below.

At first, a raw material to be obtained by mixing predetermined rates of components is prepared by mixing 94 parts by mass of a commercially available propylene homopolymer resin with an MFR of 8 g/10 min, 1 part by mass of a commercially available polypropylene resin with an MFR of 2.5 g/10 min and with a high melt tension and 5 parts by mass of a polyethylene resin with a melt index of 18 g/10 min and with an ultra-low density, as polypropylene resin components, and 0.2 part by mass of N,N'-dicyclohexyl-2,6-naphthalenedicarboxyamide as a β-crystal nucleating agent using a twin-screw extruder. In this case, it is preferred that the melt temperature is 270 to 300°C. It is preferred to install a high-precision filter capable of removing foreign matters of, for example, 50 μm or more, on the downstream side of the twin-screw extruder, for removing the foreign matters.

Then, the abovementioned mixed raw material is supplied into a single-screw melt extruder, to perform melt extrusion at 190 to 240°C. Further, a filter installed between connecting pipes for the polymer is used to remove foreign matters, transubstantial polymers, etc., and the polymer is discharged from a T die onto a casting drum, to obtain a cast sheet. In this case, it is preferred to install a high-precision filter capable of removing foreign matters of, for example, 50 μm or more, for removing the foreign matters. Further, it is preferred to install a screen filter capable of removing foreign matters of, for example, 100 μm or more and/or a static mixer on the downstream side of the high-precision filter.

Further, it is preferred that the surface temperature of the casting drum for obtaining the cast sheet is 105 to 130°C in view of controlling the β-crystal percentage in the cast sheet at a high level. In this case, especially the formation of the sheet at the edges affects the subsequent stretchability, and therefore it is preferred to spray spot air to the edges for keeping the sheet in contact with the drum. Further, air may also be sprayed to the entire surface using an air knife as required on the basis of the contact state of the entire sheet on the drum.

Subsequently the obtained cast sheet is biaxially stretched to form pores (through holes) in the film. As the biaxially stretching method, a sequential biaxial stretching method of stretching in the machine direction of the film and subsequently stretching in the transverse direction, or stretching in the transverse direction and subsequently stretching in the machine direction, or a simultaneous biaxial stretching method of stretching in the machine direction and in the transverse direction of the film almost simultaneously or the like can be used. Since a highly air-permeable film is likely to be obtained, it is preferred to employ the sequential biaxial stretching method, especially preferred to stretch at first in the machine direction and then stretching in the transverse direction.

As for specific stretching conditions, at first, the cast sheet is controlled to a temperature allowing the sheet to be stretched in the machine direction. As the temperature control method, a method of using a temperature-controlled rotating roll, or a method of using a hot air oven or the like can be used. As the stretching temperature in the machine direction, in view of film properties and uniformity thereof, it is preferred to employ a temperature of 110 to 140°C. A more preferred temperature is 120 to 135°C. It is preferred that the stretching ratio is 3 to 10 times, and a more preferred range is 4 to 6 times. A further more preferred range is 4.5 to 5.8 times. If the stretching ratio is less than 3 times, the porosity declines, and the battery characteristics may deteriorate as the case may be. Further the productivity may decline as the case may be. At a higher stretching ratio, the porosity becomes higher, but if the film is stretched at more than 10 times, the film may be likely to be broken in the subsequent lateral stretching step as the case may be. In this description, the stretching temperature in the machine direction for especially obtaining a film with a high porosity is 120 to 125°C.

Then, the monoaxially stretched polypropylene film is held at the edges of the film and introduced into a tenter-type stretching machine, and stretched in the transverse direction, to obtain a biaxially oriented film. It is preferred that the stretching temperature is 130 to 155°C. A more preferred range in view of obtaining a higher porosity is 145 to 150°C. It is preferred that the stretching ratio in the transverse direction is 3 to 10 times, and a more preferred range is 4 to 8 times. If the stretching ratio is less than 3 times, the porosity declines, and the battery characteristics may deteriorate

as the case may be. Further the productivity may decline as the case may be. If the stretching ratio is higher, the porosity becomes higher, but if the film is stretched at more than 10 times, the film may be likely to be broken as the case may be. Meanwhile, it is preferred that the transverse stretching speed in this case is 500 to 6,000%/min. Amore preferred range is 1,000 to 5,000%/min. It is especially preferred that the stretching speed is as low as 2,000%/min or lower.

Subsequently the film is heat-set in a stenter, and it is preferred that the heat setting temperature is in a range from the transverse stretching temperature to 160°C. It is preferred that the heat setting time is 5 to 30 seconds. Further, while the film is heat-set, the film can also be relaxed in the machine direction and/or in the transverse direction, and especially in view of thermal dimension stability, it is preferred that the relaxation rate in the transverse direction is 7 to 12%.

The porous polypropylene film of this invention is excellent in productivity and has a high porosity, and in addition, in use as the separator of a battery, the film of this invention can controlled to decrease coarse voids and foreign matter defects even though such coarse voids and foreign matter defects of conventional films seriously affect the battery characteristics. Therefore, the film of this invention can be preferably used as the separator of a nonaqueous electrolyte secondary battery such as a lithium ion secondary battery, which is especially required to comply with severe safety standard.

EXAMPLES

This invention is explained below in detail in reference to examples. Meanwhile, the properties were measured and evaluated according to the following methods.

(1) β-crystal formability

Five milligrams of a resin or film was placed on an aluminum pan as a sample, and a differential scanning calorimeter (RDC220 produced by Seiko Instruments Inc.) was used for measurement. At first, the sample was heated in nitrogen atmosphere from room temperature to 260°C at 10°C/min (first run), held for 10 minutes, subsequently cooled to 20°C at 10°C/min, held for 5 minutes, and heated again at 10°C/min (second run). With regard to the melt peaks observed in this case, the melt peak in the temperature range from 145 to 157°C was identified as the peak of β-crystals, and the melt peak observed at 158°C and higher, as the melt peak of α-crystals. From the area of the region surrounded by the base line drawn in reference to the flat portion on the high temperature side and either of the peaks, the corresponding melt calorie was obtained. If the melt calorie of α-crystals is $\Delta H\alpha$ and the melt calorie of β-crystals is $\Delta H\beta$, then the value calculated from the following formula is β-crystal formability. Meanwhile, the melt calorie values were calibrated using indium.

- $\beta\text{-crystal formability } (\%) = [\Delta H\beta/(\Delta H\alpha + \Delta H\beta)] \times 100$

Meanwhile, if the β-crystal presence ratio is calculated similarly from the melt peak observed in the first run, the β-crystal percentage in the state of the sample can be calculated.

(2) Melt flow rate (MFR)

The MFR of a polypropylene resin was measured in accordance with condition M (230°C, 2.16 kg) of JIS K 7210 (1995). The MFR of a polyethylene resin was measured in accordance with condition D (190°C, 2.16 kg) of JIS K 7210 (1995).

(3) Porosity

A sample with a size of 30 mm x 40 mm was obtained by cutting a film. An electronic densimeter (SD-120L produced by Mirage Co., Ltd.) was used to measure the specific gravity in an atmosphere of 23°C temperature and 65% relative humidity. The measurement was performed 3 times, and the mean value was employed as the specific gravity p of the film.

Then, the measured film was hot-pressed at 280°C and 5 MPa, and subsequently quickly cooled by water of 25°C, to prepare a sheet completely free from pores. The specific gravity of the sheet was measured by the abovementioned method, and the mean value was employed as the specific gravity (d) of the resin. Meanwhile, in the examples described later, the specific gravity values d of all the resins were 0.91. From the specific gravity of the film and the specific gravity of the resin, the porosity was calculated from the following formula.

- $$\text{Porosity (\%)} = [(d - \rho)/d] \times 100$$

(4) Quantity of transmitted light

An obtained film was slit to have a width of 210 mm, and a defect detector equipped with an unwinder and a winder was used to measure the quantity of light transmitted through the film. As the light source, a cylindrical rod lens with a length of 750 mm and a diameter of 10 mm was used, and the light of a 250 W metal halide light source was fed from the end face of the rod lens. The light source was installed at 15 mm apart from one surface of the film, and the light quantity of the irradiated light was detected from the other surface. The distance between the detector and the film was 250 mm. As the detector, two sets of a CCD line sensor camera E7450D produced by Electrosensory Device K.K. and a camera lens AiMicro-Nikkor 55mm F2.8S produced by Nikon Corp. were used in the transverse direction of the film. Inspection was performed under the following conditions. The film was made to travel at 5 m/min, and the quantity of light transmitted through the film was measured in the entire width over a length of 500 m. Table 2 states the frequency of such portions where the quantity of light transmitted through each portion was not smaller than 5 times the average quantity of light transmitted through the film as A portions/$m^2$ and the frequency of such portions where the quantity of light transmitted through each portion was 3 times to smaller than 5 times the average quantity of light transmitted through the film as B portions/$m^2$. In this case, as the average quantity of light transmitted through the film, the quantity of light transmitted through a slit film in the winding core portion and that of the slit film in the outer winding portion were measured in a length of 1 m each, and the average value was employed.
Further, in the abovementioned operation, when any portion where the quantity of light transmitted through each portion was not smaller than 5 times, and 3 times to smaller than 5 times the average quantity of light transmitted through the film could not be detected, the measuring area was increased to ten times for obtaining the frequency of such portions.

- Resolution in the transverse direction: 20 μm/pixel
- Resolution in the machine direction: 20 μm/pixel
- Visual field width: 200 mm wide in the central portion
- Scanning rate: 9,500
- Stop: 16 F

(5) Evaluation of battery characteristics

(A) Long-term characteristic at room temperature

A 40 μm thick positive electrode of lithium cobalt oxide ($LiCoO_2$) produced by Hohsen Corp. was cut to a size of 200 mm wide x 4, 000 mm long. Further, a 50 μm thick negative electrode of graphite produced by Hohsen Corp. was cut to a size of 200 mm wide x 4,000 mm long.
The abovementioned strip-like positive electrode, any one of the films for separators of the examples and comparative examples and the abovementioned sheet-like negative electrode were overlaid in this order and spirally wound to obtain a spirally wound electrode body. A bottomed cylindrical battery case was packed with the electrode body, and the leads of the positive and negative electrodes were welded. Then, an electrolyte obtained by dissolving $LiPF_6$ as a solute into a mixed solvent consisting of ethylene carbonate : dimethyl carbonate = 3 : 7 (ratio by volume) to achieve a concentration of 1 mole/L was injected into the battery case. The opening of the battery case was sealed, and the battery was preliminarily charged to prepare a cylindrical organic electrolyte secondary battery. The battery was prepared for each of the examples and comparative examples.

Each of the prepared secondary batteries was charged in an atmosphere of 25°C at 16,000 mA up to 4.2 V (the charging was performed for 3.5 hours at a constant current up to 4.2 V and at a constant voltage after reaching 4.2 V), and was discharged at 1,600 mA down to 2. 7 V. The charging and discharging operation was repeated 3 times, and the battery was charged again at 16,000 mA up to 4.2 V. Then, the secondary battery was allowed to stand in an atmosphere of 25°C, without being charged and discharged, and the voltage value was measured 50 hours later. A battery, the value of which calculated from the formula of [(Voltage value of 50 hours later)/(Initial voltage value (4.2 V))] x 100 is 95% or more, is decided to be good in the battery characteristic at room temperature. One hundred batteries were tested, and the frequency of the batteries good in the battery characteristic was obtained and evaluated according to the following criterion:

A: 90% or more
B: 80% to less than 90%

C: Less than 80%

(B) Long-term characteristic at 60°C

The operation was performed as in the abovementioned section (A) "Long-term characteristic at room temperature," except that the atmosphere in which the battery was allowed to stand for 50 hours was 60°C, and the evaluation was made according to the following criterion.

A: 90% or more
B: 80% to less than 90%
C: Less than 80%

(C) Output characteristic

A 40 μm thick positive electrode of lithium cobalt oxide ($LiCoO_2$) produced by Hohsen Corp. was punched to obtain a circle with a diameter of 15.9 mm. Further, a 50 μm thick negative electrode of graphite produced by Hohsen Corp. was punched to obtain a circle with a diameter of 16.2 mm. Then, any one of the separators of the respective examples and comparative examples was also punched to obtain a circle with a diameter of 24 mm. The negative electrode, the separator and the positive electrode were overlaid in this order from the bottom in such a manner that the active material of the positive electrode and the active material of the negative electrode might face each other, and were accommodated into a small stainless steel container with a cover (HS cell produced by Hohsen Corp.). The container and the cover were insulated from each other, and the container was kept in contact with the copper foil of the negative electrode while the cover was kept in contact with the aluminum foil of the positive electrode. An electrolyte obtained by dissolving $LiPF_6$ as a solute into a mixed solvent consisting of ethylene carbonate : dimethyl carbonate = 3 : 7 (ratio by volume) to achieve a concentration of 1 mole/L was injected into the container. In this way, the batteries of the respective examples and comparative examples were prepared.

Each of the prepared secondary batteries was charged in an atmosphere of 25°C at 1, 600 mA up to 4.2 V (the charging was performed for 3.5 hours at a constant current up to 4.2 V and at a constant voltage after reaching 4.2 V) and was discharged at 1,600 mA down to 2.7 V, as charging and discharging operation, to examine the discharge capacity. Further the battery was charged at 1,600 mA up to 4.2 V and was discharged at 16, 000 mA down to 2. 7 V, as charging and discharging operation, to examine the discharge capacity. The value calculated from the formula of [(Discharge capacity at 16,000 mA) / (Discharge capacity at 1,600 mA) ] x 100 was evaluated according to the following criterion. Meanwhile, 20 batteries were tested, and the mean value was evaluated.

A: 85% or more
B: 80% to less than 85%.
C: Less than 80%

(6) Breaking strength

The breaking strength was measured at 25°C and 65% RH according to JIS K 7127 (1999, specimen type 2) using a film strength-elongation measuring instrument (AMF/RTA-100) produced by Orientec Co., Ltd. Specifically a porous polypropylene film was cut to have a length of 15 cm in the machine direction and a width of 1 cm in the transverse direction and was elongated from an original length of 50 mm at a stress rate of 300 mm/min, to measure the breaking strength (in MPa). The same sample was measured 5 times in the same way, and the mean value of the obtained breaking strength values was employed as the breaking strength of the sample in the machine direction. Further, the breaking strength of the sample in the transverse direction was also measured by changing the sample direction.

(7) β-crystal nucleating agent content

A porous polypropylene film was added to decalin, for extracting the amide-based compound, antioxidant, etc. in the polypropylene resin, and high performance liquid chromatography was used for determination. Standard polypropylene resins known in the added amounts of the amide-based compound and the antioxidant weighed beforehand were prepared and measured in the same way, to prepare a calibration curve, for determining the amide-based compound concentration in the polypropylene

(8) Air resistance (Gurley)

From any one of the separators obtained in the examples and comparative examples, a square with a length of 100 mm per side was cut out as a sample. Type B Gurley testing machine of JIS P 8117 (1998) was used to measure the permeation time of 100 ml of air at 23°C and 65% relative humidity three times. The mean value of the permeation time was employed as the air resistance (Gurley) of the film. Meanwhile, in the case of a sample with poor air resistance (Gurley), measurement was stopped when the permeation time of 25 ml of air passed 30 minutes (1,800 seconds), and it was decided that the air resistance (Gurley) was more than 120 min/100 ml (7,200 sec/100 ml).

(Example 1)

Ninety four parts by mass of propylene homopolymer FLX80E4 (hereinafter referred to as "PP-1," MFR = 8) produced by Sumitomo Chemical Co., Ltd., 1 part by mass of polypropylene PF-814 (hereinafter referred to as "HMS-PP, " MFR = 2.5) produced by Basell as a polypropylene resin with a high melt tension, 5 parts by mass of Engage8411 (hereinafter referred to as "PE," melt index 18 g/10 min or less) as ethylene-octene-1 copolymer, 0.2 part by mass of N,N'-dicyclohexyl-2,6-naphthalenedicarboxyamide (hereinafter referred to as "β-crystal nucleating agent," Nu-100 produced by New Japan Chemical Co., Ltd.) as a β-crystal nucleating agent, 0.15 part by mass of IRGANOX1010 produced by Ciba Specialty Chemicals as an antioxidant and 0.1 part by mass of IRGAFOS168 produced by Ciba Specialty Chemicals as an antioxidant were supplied as raw materials from measuring hoppers into a twin-screw extruder so that they could be mixed at the ratio. They were melt-kneaded at 300°C and discharged from a die as a strand that was then cooled and solidified in a water tank of 25°C. It was cut to obtain chips to be used as the raw material resin of a porous polypropylene film.

The chips were supplied into a single-screw extruder (discharge rate 15 kg/hr) for melt extrusion at 235°C. The extruded material was passed through a leaf disc filter assembly consisting of ten 20 μm cut sintered filters (filtration area: 65,000 $mm^2$), to remove foreign matters, and in succession through a 50 μm cut wire-fabric screen filter (filtration area: 18,000 $mm^2$). The filtrate was discharged from a T die onto a casting drum with the surface temperature controlled at 120°C, to be kept in contact with the drum for 15 seconds, for obtaining a cast sheet. The β-crystal formability of the cast film was 80%. Subsequently the film was preheated using a ceramic roll heated to 125°C and stretched to 5 times in the machine direction. Then the film was gripped at the edges and introduced into a tenter type stretching machine, being stretched to 6. 5 times at 150°C at a stretching speed of 1,800%/min. In succession the film was relaxed by 10% in the transverse direction while it was heat-treated at 155°C for 7 seconds, to obtain a 25 μm thick porous polypropylene film. The physical properties of the obtained film are shown in Table 1. Meanwhile, the sample, the physical properties of which were evaluated, was taken after the film had been continuously formed for 10 hours under the abovementioned conditions.

The obtained separator was good in both the defectless quality and the air permeability and also good in the battery characteristics in terms of both the long-term characteristics and the output characteristic.

(Example 2)

A porous polypropylene film was obtained using the same raw material composition and film formation conditions as those of Example 1, except that a static mixer was used as an alternative to the 50 μm cut screen filter.
Since a static mixer was used as an alternative to the screen filter, the obtained separator was rather higher in the frequency of defects than the film of Example 1 and somewhat declined to B in the evaluation of the long-term characteristic at the high temperature. The output characteristic was good.

(Example 3)

A porous polypropylene film was obtained using the same raw material composition and film formation conditions as those of Example 1, except that a static mixer was installed on the downstream side of the 50 μm cut screen filter.
Since a static mixer was installed in series to the screen filter, the obtained separator was lower in the frequency of defects than the film of Example 1 and was good in both the defectless quality and the air permeability, being good in the battery characteristics in terms of both the long-term characteristics and the output characteristic.

(Example 4)

A porous polypropylene film was obtained using the same raw material composition and film formation conditions as those of Example 1, except that the temperature at the time of the melt extrusion was 200°C.
Since a preferred temperature was used as the temperature at the time of the melt extrusion, the obtained separator

was lower in the frequency of defects than the film of Example 1 and was good in both the defectless quality and the air permeability, being good in the battery characteristics in terms of both the long-term characteristics and the output characteristic.

(Example 5)

A porous polypropylene film was obtained using the same raw material composition and film formation conditions as those of Example 1, except that 40 μm cut sintered filters were used as an alternative to 20 μm cut sintered filters. Since the filter precision was changed to 40 μm, the obtained separator was rather higher in the frequency of defects than the film of Example 1 and somewhat declined to B in the evaluation of the long-term characteristics at the room temperature and the high temperature. The output characteristic was good.

(Example 6)

A porous polypropylene film was obtained using the same raw material composition and film formation conditions as those of Example 1, except that a 50 μm cut flat sheet type sintered filter (filtration area: 18,000 $mm^2$) was used as an alternative to a 50 μm cut screen filter.
Since a wire-fabric filter was changed to a sintered filter, the obtained separator was greatly enhanced in defectless quality compared with the film of Example 1. The battery characteristics were good in terms of both the long-term characteristics and the output characteristic.

(Example 7)

A porous polypropylene film was obtained using the same raw material composition and film formation conditions as those of Example 1, except that the temperature at the time of the melt extrusion was 200°C and that the added amount of the β-crystal nucleating agent was 0.03 part by mass.
The obtained separator was good in the defectless quality and also good in the long-term characteristics. However, since the amount of the β-crystal nucleating agent was small, the air permeability declined, and the evaluation of the output characteristic declined to B.

(Example 8)

A porous polypropylene film was obtained using the same raw material composition and film formation conditions as those of Example 1, except that the stretching ratio in the machine direction was changed to 2.8 times.
Since the stretching ratio was low, the obtained separator was lowered in the frequency of defects and good in the long-term characteristics. However, since the stretching ratio in the machine direction was low, the air permeability declined and the evaluation of the output characteristic declined to B. Further, since the strength declined, the processability for assembling the battery also declined.

(Example 9)

A porous polypropylene film was obtained using the same raw material composition and film formation conditions as those of Example 1, except that the stretching ratio in the transverse direction was changed to 2.8 times.
Since the stretching ratio was low, the obtained separator was lowered in the frequency of defects and good in the long-term characteristics. However, since the stretching ratio in the transverse direction was low, the air permeability declined and the evaluation of the output characteristic declined to B. Further, since the strength declined, the processability for assembling the battery also declined.

(Comparative Example 1)

A porous polypropylene film was obtained using the same raw material composition and film formation conditions as those of Example 1, except that the 20 μm cut sintered filter and the 50 μm cut screen filter were not used.
The obtained separator was higher in the frequency of defects, and therefore was deteriorated in the long-term characteristics.

(Comparative Example 2)

A porous polypropylene film was obtained using the same raw material composition and film formation conditions

as those of Example 1, except that the 50 μm cut screen filter was not used.
The obtained separator was higher in the frequency of defects, and therefore was deteriorated in the long-term characteristics.

(Comparative Example 3)

A porous polypropylene film was obtained using the same raw material composition and film formation conditions as those of Example 1, except that the temperature at the time of the melt extrusion was 200°C and that the 50 μm cut screen filter was not used.
The obtained separator was higher in the frequency of defects, and therefore was deteriorated in the long-term characteristics.

(Comparative Example 4)

A porous polypropylene film was obtained using the same raw material composition and film formation conditions as those of Example 1, except that a 15 μm cut screen filter was used as an alternative to the 50 μm cut screen filter and that the discharge rate was changed to 3 kg/hr in order to prevent the breakage of the screen filter. When the same discharge rate as that of Example 1 was used, the pressure loss across the screen filter became so high as to make film formation difficult.
The obtained separator became high in the frequency of defects, to deteriorate the long-term characteristics, since the discharge rate was so low as to increase the retention time.

(Comparative Example 5)

A porous polypropylene film was obtained using the same raw material composition and film formation conditions as those of Example 1, except that a leaf-disc type filter assembly consisting of ten 15 μm cut sintered filters was installed as an alternative to the 50 μm cut screen filter.
Since the flat sheet type filter was not installed, the obtained separator became high in the frequency of defects, to deteriorate the long-term characteristics.

[Table 1]

| | Thickness | Stretching ratio in machine direction | Stretching ratio in transverse direction | Breaking strength in machine direction | Breaking strength in transverse direction | Porosity | Air resistance | β-crystal nucleating agent content | β-crystal formability |
|---|---|---|---|---|---|---|---|---|---|
| | μm | times | times | MPa | MPa | % | sec/100 ml | mass% | % |
| Example 1 | 25 | 5 | 6.5 | 82 | 51 | 70 | 181 | 0.21 | 82 |
| Example 2 | 25 | 5 | 6.5 | 81 | 51 | 70 | 187 | 0.21 | 81 |
| Example 3 | 25 | 5 | 6.5 | 80 | 52 | 70 | 185 | 0.21 | 79 |
| Example 4 | 25 | 5 | 6.5 | 80 | 50 | 70 | 183 | 0.21 | 80 |
| Example 5 | 25 | 5 | 6.5 | 82 | 53 | 70 | 180 | 0.21 | 81 |
| Comparative Example 1 | 25 | 5 | 6.5 | 82 | 50 | 70 | 181 | 0.21 | 80 |
| Comparative Example 2 | 25 | 5 | 6.5 | 83 | 52 | 70 | 181 | 0.21 | 82 |
| Comparative Example 3 | 25 | 5 | 6.5 | 81 | 51 | 70 | 180 | 0.21 | 80 |
| Comparative Example 4 | 25 | 5 | 6.5 | 80 | 50 | 70 | 183 | 0.21 | 81 |
| Comparative Example 5 | 25 | 5 | 6.5 | 81 | 50 | 70 | 180 | 0.21 | 81 |
| Example 6 | 25 | 5 | 6.5 | 82 | 52 | 70 | 180 | 0.21 | 82 |
| Example 7 | 25 | 5 | 6.5 | 106 | 62 | 60 | 490 | 0.03 | 35 |
| Example 8 | 25 | 2.8 | 6.5 | 53 | 51 | 60 | 320 | 0.21 | 81 |
| Example 9 | 25 | 5 | 2.8 | 80 | 32 | 60 | 480 | 0.21 | 80 |

[Table 2]

| | Frequency of defects (pcs/$m^2$) | | Evaluation of battery characteristics | | |
|---|---|---|---|---|---|
| | A | B | Long-term characteristics | | Output characteristic |
| | | | 25°C | 60°C | |
| Example 1 | 0.1 | 0.2 | A | A | A |
| Example 2 | 0.2 | 1.1 | A | B | A |
| Example 3 | 0.07 | 0.09 | A | A | A |
| Example 4 | 0.04 | 0.01 | A | A | A |
| Example 5 | 0.4 | 0.8 | B | B | A |
| Comparative Example 1 | 20 | 40 | C | C | A |
| Comparative Example 2 | 5 | 10 | C | C | A |
| Comparative Example 3 | 0.6 | 8 | B | C | A |
| Comparative Example 4 | 2 | 2 | C | C | A |
| Comparative Example 5 | 5 | 8 | C | C | A |
| Example 6 | 0.004 | 0.001 | A | A | A |
| Example 7 | 0.07 | 0.1 | A | A | B |
| Example 8 | 0.05 | 0.1 | A | A | B |
| Example 9 | 0.05 | 0.1 | A | A | B |

In the examples complying with the requirements of this invention, the films obtained are high in porosity, excellent in productivity and also excellent in quality, and therefore can be considered to be suitably used as separators for electric storage devices. On the other hand, the films of the comparative examples have many defects devaluating their use in batteries and cannot be suitably used as separators of electric storage devices.

INDUSTRIAL APPLICABILITY

The porous polypropylene film of this invention is excellent in quality and productivity and has a high porosity, and therefore can be suitably used as a separator of a lithium ion battery.

## Claims

1. A porous polypropylene film, in which the number of such portions where the quantity of light transmitted through each portion is not smaller than 5 times the average quantity of light transmitted through the film is 0.5 portion or less per 1 $m^2$.

2. A porous polypropylene film according to claim 1, wherein the number of such portions where the quantity of light transmitted through each portion is 3 times to smaller than 5 times the average quantity of light transmitted through the film is 1 portion or less per 1 $m^2$.

3. A porous polypropylene film according to claim 1 or 2, where the porous polypropylene film is produced by a dry method.

4. A porous polypropylene film according to any one of claims 1 through 3, wherein the porosity is 60 to 85%.

5. A porous polypropylene film according to any one of claims 1 through 4, wherein the porous polypropylene film contains polypropylene resin with β-crystal formability of 40 to 90%.

**6.** A porous polypropylene film according to any one of claims 1 through 5, wherein the polypropylene resin constituting the porous polypropylene film contains 0.05 to 0.5 mass% of β-crystal nucleating agent based on the amount of the entire polypropylene resin.

**7.** A porous polypropylene film according to any one of claims 1 through 6, wherein the breaking strength in the machine direction $E_M$ is 65 MPa or more, and the breaking strength in the transverse direction $E_T$ is 45 MPa or more.

**8.** A method for producing the porous polypropylene film as set forth in any one of claims 1 through 7, comprising the step of stretching a polypropylene film formed by a dry method at a ratio of 3 times to 10 times respectively in the machine direction and in the transverse direction.

**9.** A method for producing a porous polypropylene film according to claim 8, wherein the polypropylene film formed by a dry method contains polypropylene resin with a β-crystal formability of 40 to 90%.

**INTERNATIONAL SEARCH REPORT**

International application No.
PCT/JP2010/054425

A. CLASSIFICATION OF SUBJECT MATTER
*C08J9/00*(2006.01)i, *B29C55/02*(2006.01)i, *H01M2/16*(2006.01)i

According to International Patent Classification (IPC) or to both national classification and IPC

B. FIELDS SEARCHED

Minimum documentation searched (classification system followed by classification symbols)
C08J9/00, B29C55/02, H01M2/16

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | WO 2007/046226 A1 (Toray Industries, Inc.), 26 April 2007 (26.04.2007), paragraphs [0001] to [0014], [0029], [0031], [0034], [0102], [0106], [0153] to [0156], [0214], [0215] & US 2009/0219672 A & EP 1950821 A1 & KR 10-2008-0070664 A & CA 2625083 A | 1-9 |
| A | WO 2007/026579 A1 (Nippon Zeon Co., Ltd.), 08 March 2007 (08.03.2007), paragraphs [0009], [0010] (Family: none) | 1-9 |
| A | JP 2008-201814 A (Toray Industries, Inc.), 04 September 2008 (04.09.2008), paragraphs [0001], [0044], [0063] (Family: none) | 1-9 |

☐ Further documents are listed in the continuation of Box C.  ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 July, 2010 (01.07.10) | 13 July, 2010 (13.07.10) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 55131028 A
- JP 55032531 B
- JP 57203520 A
- JP 63199742 A
- JP 6100720 A
- JP 9255804 A
- WO 05103127 A
- JP 5310665 A